# EUROPÄISCHE PATENTSCHRIFT

(11) **EP 2 995 703 B1**
(45) Veröffentlichungstag und Bekanntmachung des Hinweises auf die Patenterteilung: **28.08.2019**
(21) Anmeldenummer: 14184103.1
(22) Anmeldetag: 09.09.2014
(51) Int. Cl.: C25D 7/12, C25D 5/02, C25D 5/54, C23C 18/16, H01M 4/04, H01M 4/1395, H01M 10/052

(54) **Verfahren zur Herstellung von Flächenableitelektroden und Halbzeug zur Durchführung des Verfahrens**
Method for the preparation of surfaces dissipation electrodes and semi-finished product for carrying out the method
Procédé de fabrication d'électrodes de dérivation de surface et semi-produit destiné à exécuter le procédé

(43) Veröffentlichungstag der Anmeldung: 16.03.2016
(73) Patentinhaber: Christian-Albrechts-Universität zu Kiel, 24118 Kiel (DE)
(72) Erfinder: Nöhren, Sandra, 24783 Osterrönfeld (DE); Bahr, Jörg, 24161 Altenholz-Klausdorf (DE); Carstensen, Jürgen, Dr., 24146 Kiel (DE)
(74) Vertreter: Hansen, Jochen

(56) Entgegenhaltungen:
- WO-A1-99/13313
- WO-A1-03/027353
- DE-A1-102005 043 242
- JP-A- 2005 126 664
- US-A- 5 283 138

## Beschreibung

Die Erfindung betrifft ein Verfahren zur Herstellung von Flächenableitelektrode mittels Elektroplattierung sowie ein Halbzeug zur Durchführung des Verfahrens.

Flächenableitelektroden sind flächig ausgebildete, elektrisch gut leitende und üblich aus Metall, z.B. aus Kupfer oder einem Edelmetall, gefertigte Vorrichtungen zur elektrischen - oder auch thermischen - Kontaktierung der Oberfläche eines Körpers.

Insbesondere kommen Flächenableitelektroden bei der Fertigung von Solarzellen als Ladungssammler, engl. "charge collector", oder in der Batterieherstellung als Elektroden in Kontakt mit dem elektrochemisch aktiven Medium zur Anwendung.

Es ist dabei gängig, Flächenableitelektroden mit Methoden der Dünnschichttechnik unmittelbar auf die Oberfläche des Körpers, i. F. Substrat genannt, aufzutragen, beispielsweise einen dünnen Metallfilm auf einen Silizium-Wafer mit einem Sputter-Prozess. Für größere Schichtdicken und präzise Positionierung der Elektroden ist der InkJet-Druck metallischer Tinten bekannt. Bei Massenartikeln wird aus Gründen der geringen Kosten und hohen Prozessgeschwindigkeit bevorzugt auf die elektrochemische Abscheidung aus einem Metallsalz enthaltenden Bad zurückgegriffen.

Die elektrochemische Abscheidung, auch Galvanisierung oder Elektroplattierung bzw. engl. "electroplating" genannt, ist auf elektrisch gut leitenden Substraten unproblematisch, doch Halbleiter wie Silizium oder auch Keramiken bedürfen einer Vorbehandlung zur Erzeugung einer elektrisch leitenden Keimschicht, engl. "seed layer", bevor sie im Elektrolytbad beschichtet werden können. Zur Bildung der Keimschicht bietet sich ein nasschemisches Verfahren an, bei dem Metallionen im Elektrolyten durch Zugabe eines Reduktionsmittels reduziert und als Elementmetall an der Substratoberfläche abgeschieden werden.

Aus der Druckschrift US 6,194,032 B1 ist beispielsweise eine Gelzusammensetzung bekannt, die die Substanzen zur chemischen Abscheidung eines Metallfilms bereits enthält und durch Auftragen auf vorbestimmte und zuvor katalytisch aktivierte Oberflächenbereiche eines Substrats ebendort dünne - d.h. 100 bis 2000 Nanometer dicke - Metallfilme erzeugen kann.

Eine Flächenableitelektrode soll keinen zu hohen elektrischen Widerstand besitzen und darf daher nicht als ein zu dünner Metallfilm ausgelegt sein. Typischerweise zielt man hier auf Filmdicken größer als 10 Mikrometer, bevorzugt auf mehr als 20 Mikrometer ab. Durch elektrisches Kontaktieren der Keimschicht - gewöhnlich punktuell, meist am Rand der Keimschicht - kann nun eine Spannung angelegt und weiteres Metall auf der Keimschicht abgeschieden werden.

Die Elektroplattierung erfolgt zum Erzielen einer hohen Abscheiderate gewöhnlich mit hohen Stromdichten. Die Keimschicht stellt dabei ein a priori nicht genau bekanntes ohmsches Widerstandsnetzwerk dar, in das der Strom an vorbestimmten Punkten einfließt. An allen Orten dieses Netzwerks ändern sich die Widerstände fortlaufend während der Metallabscheidung, insbesondere in der Anfangsphase. Ohne genaue Prozesskontrolle ist es oft schwierig, auf der gesamten Keimschicht eine gleichmäßige Abscheiderate zu erreichen.

Besonders hohe Anforderungen an die Präzision stellt beispielsweise das Erzeugen von Metallisierungsschichten auf integrierten Schaltkreisen, d.h. Mikrochips. Die Druckschriften US 6,132,587 und US 6,270,646 B1 befassen sich beide mit der Aufgabe, Vorrichtungen zur verbesserten und gleichmäßigeren Elektroplattierung von Mikrochips zu schaffen. In der US 6,132,587 wird vorgeschlagen, mehrere Prozessparameter zu kontrollieren, darunter auch die Anströmung des Substrats durch den Elektrolyten durch das Vorsehen eines rotierenden Distributors vor dem Wafer. Aus der US 6,270,646 B1 geht hervor, dass ein kompressibler, poröser, an seiner Oberfläche elektrisch leitfähiger Körper in Kontakt mit dem Wafer angeordnet werden soll, der den Elektroplattierungsstrom zum Substrat führt. Der Porenraum des Körpers soll den Elektrolyten aufnehmen und dessen Zugang zum Substrat erlauben.

Aus der Druckschrift WO 99/13313 A1 ist ein Verfahren zur Herstellung von Arrays mit hoher Dichte von Zielsubstanzen, umfassend den Schritt des Abschnitts eines Bündels von Zielsträngen, bekannt, wobei die Zielstränge die Zielsubstanzen umfassen, und wobei das Trennen zu mehreren Arrays mit hoher Dichte führt. Zusätzlich kann das Verfahren zusätzliche Schritte enthalten, wie etwa das Stabilisieren der Zielstränge oder -bündel, das Einfügen eines oder mehrerer zusätzlicher Materialien in das Array mit hoher Dichte und das Abfragen des Arrays mit hoher Dichte. Auch ein Array mit hoher Dichte wird gemäß dem Verfahren hergestellt.

Ferner ist aus der Druckschrift US 5,283,138 A eine leichte Zinkelektrode aus einer gesinterten Matte aus kupfermetallbeschichteten Graphitfasern und ein Verbundmaterial aus Zinkaktivmaterial und ein Hydrogel bekannt, das in einer festen, undurchlässigen, inerten Polymermatrix dispergiert ist, wobei das Verbundmaterial die einzelnen kupfermetallbeschichteten Graphitfasern der gesinterten Matte umgibt, die das Verbundmaterial tragen und Pfade bilden elektrische Leitfähigkeit im gesamten Verbundwerkstoff.

Die Druckschrift JP 2005 126664 A offenbart die Bereitstellung eines Behandlungsmittels zur Bildung eines Dünnfilms, der in der Lage ist, Lichtsperrwirkung im nahen Infrarot und Designeigenschaft für Glas usw. zu verleihen, und ein Verfahren zur Bildung des Dünnfilms. Dieses Verfahren zum Bilden des dünnen Films wird durch Aufbringen des Behandlungsmittels zum Bilden des dünnen Films bereitgestellt, der Edelmetall-Nanostäbchen, eine metallorganische Verbindung, ein Lösungsmittel, eine Viskositätseinstellung enthält und einen Sol-Gel-Reaktionskatalysator auf der Oberfläche eines aus Glas, einer Keramik oder einem Metall hergestellten Substrats, Trocknen und Brennen des getrockneten Gelfilms zum Bilden eines Metalloxidfilms auf der Substratoberfläche durch Fixieren des Edelmetalls Nanorods ohne ihren Zusammenhalt. Dadurch ist es möglich, Eigenschaften zu entwickeln, die sowohl von der kurzen Achse als auch von der langen Achse von Nanostäbchen herrühren, und beide Funktionen der Design-Eigenschaft und der Nah-Infrarot-Lichtblockierungseigenschaft zu verleihen.

Die Druckschrift DE 10 2005 043242 A1 offenbart eine Dispersion zum Aufbringen einer Metallschicht auf einem elektrisch nicht leitfähigen Substrat, enthaltend eine organische Bindemittelkomponente, eine Metallkomponente mit unterschiedlichen Metallen und/oder Metallteilchenformen sowie eine Lösemittelkomponente. Weiterhin betrifft die Erfindung Verfahren zur Herstellung der Dispersion, Verfahren zur Herstellung einer gegebenenfalls strukturierten Metallschicht mit Hilfe der Dispersion sowie die erhaltenen Substratoberflächen und deren Verwendung.

Es ist auch bekannt, die Keimschicht dadurch zu kontaktieren, dass ein Rahmen mit parallel gespannten Metalldrähten auf die Keimschicht aufgelegt wird, wobei die Stromeinspeisung ausgehend von einem Anschluss im Rahmen durch alle Drähte erfolgt. Der Elektrolyt hat durch den Zwischenraum der Drähte freien Zugang zur Keimschicht, und die Abscheidung erfolgt ausgehend von den Drähten derart, dass die Drähte dabei in das abgeschiedene Metall eingebettet werden. Gewöhnlich besteht die gesamte so erzeugte Flächenableitelektrode, d.h. die Keimschicht, die darauf galvanisch abgeschiedene Schicht und die in dieser Schicht eingebetteten Drähte, aus nur einem Elementmetall, beispielsweise Kupfer. Die Drähte sind dabei erheblich dicker als die abgeschiedene Schicht und überragen diese bzw. treten aus dieser hervor. Der geschilderte Elektrodenaufbau ist für viele Bauelemente wie Solarzellen oder mikroelektronische Komponenten ein Standard-Design, um mit wenig Material, d.h. je nach Anwendung wenig Platzbedarf, wenig Gewicht, wenig Abschattung, eine gut leitende Flächenableitelektrode zu bilden.

Die vorgenannte Kontaktierung der Keimschicht mit Drähten erweist sich jedoch als problematisch, wenn größere Flächen mit entsprechend längeren Drähten elektroplattiert werden sollen. Schon leichteste Verbiegungen der Drähte, d.h. mechanische Verspannungen in den Drähten, machen es nahezu unmöglich, genügend viele, homogen verteilte Kontaktpunkte zur Keimschicht herzustellen. Ein Anpressen der Drähte während der galvanischen Abscheidung ist auch nicht möglich, da hierdurch die Benetzung der Oberfläche mit frischem Elektrolyten zumindest lokal unterdrückt wird.

Die Erfindung stellt sich nun die Aufgabe, das Erzeugen großflächiger Flächenableitelektroden mittels galvanischer Abscheidung zu vereinfachen.

Die Aufgabe wird gelöst durch ein Verfahren zur Erzeugung metallischer Flächenableitelektroden auf nicht-metallischen Substraten mit den Schritten
a. Erzeugen einer metallischen Keimschicht auf einem Substrat;
b. Elektrisches Kontaktieren der Keimschicht mit einem Metalldrahtnetzwerk und einem Metallionen enthaltenden Elektrolyten;
c. Galvanisches Abscheiden eines Metallfilms aus dem Elektrolyten wenigstens auf der Keimschicht unter Einbettung des Metalldrahtnetzwerks in den Metallfilm,
dadurch gekennzeichnet, dass
d. gegeneinander bewegliche Metalldrahtfilamente zu einem elektrisch perkolierenden Metalldrahtnetzwerk angeordnet werden,
e. die Anordnung der Metalldrahtfilamente in ein Gel eingegossen und das Gel zur Gelmatrix hiernach getrocknet wird und
f. die getrocknete Gelmatrix mit dem darin eingebetteten Metalldrahtnetzwerk auf das Substrat aufgebracht und mit einem Lösungsmittel der Gelmatrix benetzt wird.

Die Unteransprüche geben vorteilhafte Ausgestaltungen des Verfahrens an. Ein Nebenanspruch ist auf ein Halbzeug gerichtet, dass im Zuge des Verfahrens gebildet wird und für sich genommen lagerfähig und als Hilfsmittel zur Durchführung der Erfindung handelbar ist.

Ausgangspunkt der Erfindung sind Untersuchungen der Erfinder zur effizienten Erzeugung von Flächenableitelektroden auf Silizium mittels chemischer Abscheidung einer Keimschicht und Elektroplattierung mit einer Drahtrahmenkontaktierung wie zuvor beschrieben. Dabei wird Folgendes erkannt:
Die am Rand des Werkstückes miteinander verbundenen parallelen Drähte erlauben einen mit geringen ohmschen Verlusten verbundenen Stromtransport zum Rand der Probe hin, sind aber insofern nicht ideal, als dass sie keine Querverbindungen aufweisen. Solche Querverbindungen sind jedoch äußerst wünschenswert, da sie zu einer hohen Fehlertoleranz führen: Ein einzelner durchbrochener Draht führt nicht zu einer kompletten Isolierung von Bereichen der Keimschicht, sondern solche Bereiche werden dann über Querverbindungen mit dem Rest des Netzwerks verbunden. Ein aus sich kreuzenden parallelen Drähten aufgebautes Netz erfüllt diese Eigenschaft, benötigt jedoch sehr viel Metall um effizient alle Flächenelemente mit dem Rand zu verbinden. Werden zudem die Kontaktpunkte der sich kreuzenden Drähte fest miteinander verbunden, so ist das Netz noch deutlich steifer als nur parallel liegende Drähte, was das oben beschriebene Problem die Kontaktierung der Keimschicht mit den Drähten/dem Netz noch deutlich erhöht. Überdies muss die Gesamtoberfläche des Drahtnetzes im Vergleich zu der der Keimschicht möglichst klein sein, weil die galvanische Abscheidung auf allen mit dem Elektrolyten in Kontakt stehenden Oberflächen erfolgt, hauptsächlich jedoch zu einer Erhöhung der Metallfilmdicke führen soll.

Erfindungsgemäß wird deshalb das Drahtnetzwerk aus gegeneinander beweglichen Metalldrahtfilamenten - i. F. auch kurz Filamente genannt - gebildet, wobei die Filamente Längen aus dem Intervall 2 Millimeter bis 1 Zentimeter und Durchmesser aus dem Intervall 50 bis 500 Mikrometer aufweisen. Bevorzugt werden Filamente aus dem Längenintervall 5 bis 9 Millimeter und dem Durchmesserintervall 80 bis 200 Mikrometer verwendet. Es ist ausdrücklich nicht erforderlich, dass alle Filamente eines Netzwerkes dieselben Längen oder Durchmesser besitzen. Die Filamente bestehen vorzugsweise aus Kupfer oder einem Edelmetall. Bevorzugt bestehen die Filamente aus demselben Elementmetall, mit dem das Substrat elektroplattiert werden soll.

Das erfindungsgemäße Drahtnetzwerk kann im Prinzip durch das gezielte Anordnen der einzelnen Filamente zusammengesetzt werden, wobei auf die Existenz ausreichend vieler Kontaktpunkte der Filamente untereinander zu achten ist. Dieses Vorgehen ist jedoch aufwendig und allenfalls einem Roboter wiederholt zumutbar. Viel einfacher und ausreichend ist es, die Filamente ungeordnet auf eine ebene Unterlage - aber noch nicht auf das Substrat bzw. die Keimschicht - aufzuschütten. Die dann in zufälliger Anordnung kreuz und quer liegenden Filamente bilden gewöhnlich ganz von selbst ein untereinander gut kontaktiertes Drahtnetzwerk.

Das erfindungsgemäße Drahtnetzwerk soll entlang der Keimschicht elektrisch perkolierend ausgebildet sein, d.h. von jedem Randkontaktpunkt des Netzwerks muss ein elektrischer Strom zu jedem anderen Randkontaktpunkt des Netzwerks fließen können. Unter einem Randkontaktpunkt ist dabei ein Punkt auf einem Filament am Außenrand des Drahtnetzwerks zu verstehen, der mit Zuleitungen elektrisch kontaktiert wird, z.B. mittels metallischer Klemmen.

Das mit dem Drahtnetzwerk verbundene ohmsche Widerstandsnetzwerk soll zudem die Eigenschaft besitzen, dass zwischen jeweils zwei diametral einander gegenüberliegenden Randkontaktpunkten entlang aller Richtungen in etwa derselbe ohmsche Gesamtwiderstand vorliegt. Ein Drahtnetzwerk sollte vorzugsweise nur dann für die Durchführung der Erfindung verwendet werden, wenn sich der minimale und der maximale Widerstandswert um nicht mehr als den Faktor 2 unterscheiden. Man überzeugt sich leicht durch einige Testmessungen, ob das Drahtnetzwerk die geforderten Eigenschaften besitzt.

Das aus Filamenten gebildete Netzwerk weist eine höhere Zahl von Kontaktpunkten zur Unterlage auf als aufgelegte parallele Drähte oder Gitter, da die Filamente gegeneinander beweglich sind und jedes einzelne Filament für sich selbst nach Stützungspunkten auf der Unterlage "sucht". Zwar kann es vereinzelt vorkommen, dass manche Filamente die Unterlage gar nicht berühren, sondern allein von anderen Filamenten getragen werden, aber auch dann bewirken sie immer noch die Querkontaktierung der Filamente und drücken zugleich die tragenden Filamente durch ihr Eigengewicht auf die Unterlage.

Das Filament-Netzwerk ist so noch nicht ohne weiteres transportabel und auf das Substrat mit Keimschicht auflegbar. Ein weiterer erfindungsgemäßer Verfahrensschritt ist deshalb das Eingießen des zuvor auf der Unterlage bereitgestellten Drahtnetzwerkes in ein Gel und das Trocknen des zunächst fließfähigen Gels zur Gelmatrix mit dem darin eingebetteten Drahtnetzwerk. Auf diese Weise werden die Filamente vorübergehend in ihrer Anordnung fixiert, gewissermaßen "eingefroren".

Mit diesem Schritt wird ein Halbzeug geschaffen, das die getrocknete Gelmatrix und das eingebettete Drahtnetzwerk umfasst. Das getrocknete Gel bildet einen mechanisch recht stabilen, plastikfolienartigen Film und kann mitsamt dem Drahtnetzwerk von der Unterlage - auf die die Filamente z.B. geschüttet worden sind - abgehoben werden. Das Halbzeug ist typisch eine flache Scheibe von einigen Millimetern Dicke, die man beliebig lange lagern und auch leicht transportieren kann. Es kann zugeschnitten oder gestanzt werden.

Bezogen auf das erfindungsgemäße Verfahren bedeutet die Herstellbarkeit eines lagerfähigen und somit auch handelbaren Halbzeugs, dass das Verfahren durch eine Lager- und/oder Transportzeitspanne - für das Halbzeug - zwischen den Verfahrensschritten e. und f. unterbrochen sein kann. Die Serienherstellung des Halbzeugs kann ohne weiteres an andere Orte bzw. Hersteller ausgelagert werden.

Vorteilhafterweise sind die Drahtfilamente im weitgehend durchsichtigen getrockneten Gel leicht mit dem bloßen Auge zu erkennen. Zur Serienherstellung des Halbzeugs könnte man daher leicht sehr große Flächen mit Filamenten bestreuen und mit Gel eingießen und dann nach der Trocknung automatisch jene Bereiche herausschneiden, in denen das sichtbare Netzwerk mit hoher Wahrscheinlichkeit elektrische Perkolation und einen weitgehend richtungsunabhängigen Gesamtwiderstand aufweist. Etwaiger Verschnitt ist dabei vollständig wiederverwendbar.

Normalerweise werden zur Elektroplattierung wässrige Metallsalzlösungen benutzt. In diesem Fall sind Hydrogele zur Bildung des Halbzeugs zu verwenden, z.B.:
a. Proteingele - z.B. Gelatine
b. Nukleinsäuregele - z.B. Agarose
c. Polymere - Polyacrylamide (PAA).

Diesen Gelarten ist gemein, dass die Basiskomponenten selbst eine geringe lonenleitfähigkeit aufweisen und dass sie in dem für die galvanische Abscheidung notwendigen pH-Bereich relativ stabil sind und sich bei Anlegen der notwendigen Spannungen nicht zersetzen. Nukleinsäuregele und Polyacrylamide sind Polysacharide, die z.B. in der Mikrobiologie für die Gelelektrophorese genutzt werden, um Ionen (DNA) von der sie umgebenden Matrix zu trennen.

Die Hydrogele wirken wie ein Schwamm: Sobald die Polymerketten mit Wasser in Berührung kommen, quellen diese zu einem Gel auf, ohne Kräfte auf das eingebettete Drahtnetzwerk auszuüben. Die Drahtfilamente werden innerhalb des aufgequollenen Gels wieder gegeneinander beweglich. Die Oberflächenspannung des Wassers führt zu einem sehr intimen Kontakt der Gelschicht mit der Oberfläche eines Werkstücks, was die Anzahl der Kontaktpunkt des Drahtnetzwerkes mit der Keimschicht deutlich erhöht gegenüber der Situation an Luft oder auch ohne Geleinbettung in der Flüssigkeit.

Das erfindungsgemäße Halbzeug fixiert also nicht nur das aus Filamenten gebildete Netzwerk für den Transport zur bzw. zum Ablegen auf die Keimschicht, sondern es bewirkt auch eine merklich verbesserte Kontaktierung des Netzwerkes mit der Keimschicht.

Nach dem Aufbringen des Halbzeugs auf die Keimschicht und dem Benetzen des Halbzeugs mit Wasser oder wässrigem Elektrolyt kann die Elektroplattierung in an sich bekannter Weise durchgeführt werden. Nachströmender Elektrolyt wird von dem aufgequollenen Hydrogel nicht merklich behindert. Das Hydrogel wird entweder während des Elektroplattierens chemisch zersetzt oder nach dem Ende der Metallisierung mit dem Elektrolyt zusammen abgewaschen. Die Drahtfilamente werden hingegen in den erzeugten Metallfilm eingebettet und verbleiben dort als den Film überragende Strukturen. Das Halbzeug wird insofern beim Elektroplattieren verbraucht.

Nachfolgend sollen ein Ausführungsbeispiel und zwei sehr vorteilhafte Ausgestaltungen der Erfindung vorgestellt werden. Dabei zeigen die Figuren:
- Fig. 1: Fotographie eines zur Herstellung von Flächenableitelektroden verwendbaren Halbzeugs;
- Fig. 2: Fotographie zweier Flächenableitelektroden.

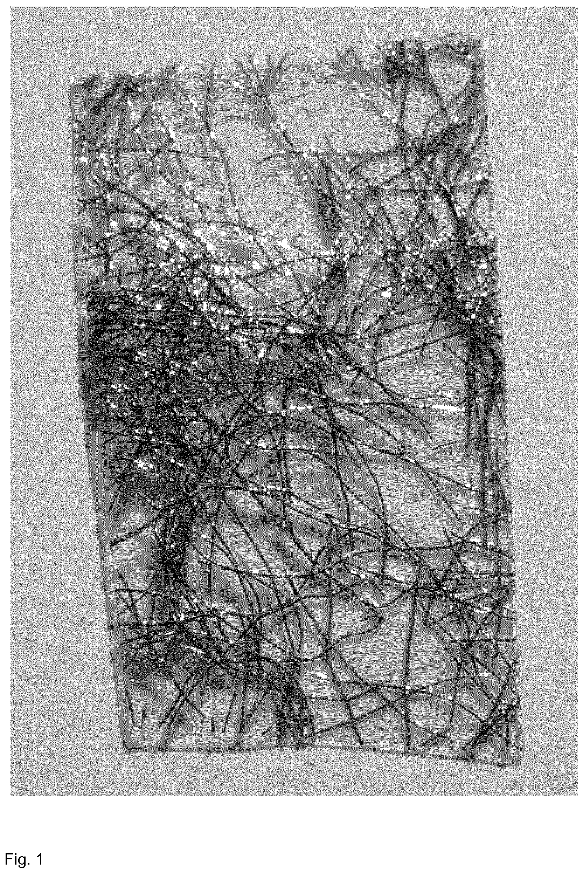

Das in Fig. 1 gezeigte Halbzeug wird hergestellt durch die Schüttung von Kupferdrahtfilamenten mit Durchmessern zwischen 100 und 200 Mikrometern und einer Länge von 9 Millimetern auf eine trockene Unterlage. Das so gebildete Drahtnetzwerk wird in eine Matrix aus Polyacrylamid (rein, Pulver, Roth) eingegossen, wobei eine Menge von 0,2 g PAA-Pulver in 6 ml deionisiertem Wasser genutzt wird. Das PAA-Pulver löst sich sehr gut in Wasser unter 50 °C. Wird ein höherer Gewichtsanteil an PAA verwendet, so bildet sich ein "Götterspeisen"-ähnliches Gel, was für diese Zwecke unbrauchbar ist. Auch ein zu hoher Wasseranteil ist nicht zweckdienlich.

Anschließend wird das Gel für 24 Stunden bei Raumluft getrocknet, wodurch es in einen plastikfolienartigen Zustand übergeht. Das gezeigte Halbzeug ist dann fertiggestellt. Es kann in Stücke geschnitten und z.B. auf zwei Substrate verteilt werden.

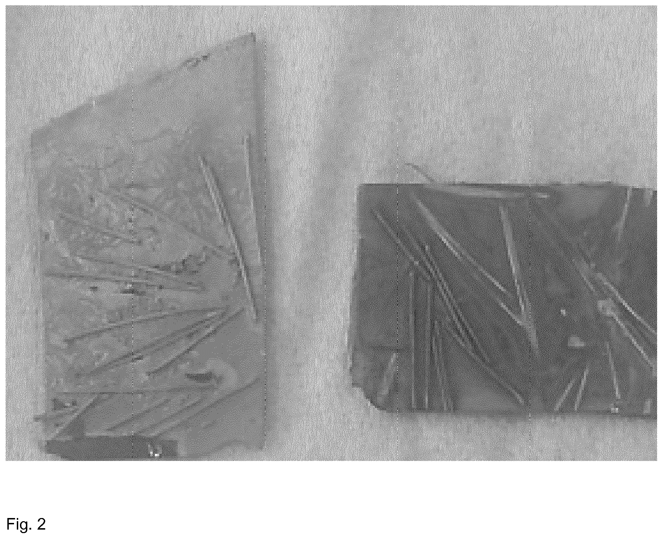

Flächenableitelektroden wie gezeigt in Fig. 2 sind aus dem Halbzeug aus Fig. 1 herstellbar. Vor dem Elektroplattieren werden dazu jeweils Stücke des Halbzeugs auf Substraten angeordnet und zusammen mit den Substraten für 2 Minuten in 30 °C warmes deionisiertes Wasser gelegt. Dabei ist darauf zu achten, dass die Gelmatrix sich nicht vollständig auflöst.

Eine besonders vorteilhafte Ausgestaltung der Erfindung ist darin zu sehen, dass dem Hydrogel bereits beim Eingießen des Drahtnetzwerkes - also dem Herstellen des Halbzeugs - der Elektrolyt und weitere chemische Substanzen zur nasschemischen Abscheidung einer Keimschicht beigemengt werden können. Diese Abscheidung soll aber erst bei Kontakt des Halbzeugs mit dem zu metallisierenden Substrat ausgelöst werden, d.h. dem Halbzeug wird eine aktivierende Komponente vorenthalten, die erst bei Kontaktierung mit dem Substrat eingeführt wird. Diese Komponente soll hier als Reaktionsaktivator bezeichnet sein. Das erfindungsgemäße Verfahren folgt dabei dem Vorschlag der eingangs erwähnten US 6,194,032 B1 und bildet diesen in einer Weise fort, die unmittelbar zur Einbettung der Drahtfilamente bereits in die dann entstehende Keimschicht führt.

Es soll dabei verstanden sein, dass im Kontext der Erfindung die Einbettung der Filamente in die Keimschicht eine Ausgestaltung des Oberbegriffs Kontaktierung der Keimschicht darstellt, auch dann, wenn diese erst in Anwesenheit der Filamente gebildet wird.

Konkret für die Elektroplattierung von Silizium mit Kupfer wurde gefunden, dass das Hydrogel bevorzugt mit einer Lösung aus Kupfersulfat (CuSO₄) und Flusssäure (HF) angerührt - geliert - werden kann. Insbesondere PAA zeigt sich auch gegenüber HF beständig. Beispielsweise werden auch hier 0,2 g PAA-Pulver in 6 ml der Flusssäure-CuSO4 Lösung unter Rühren bei 30 °C gelöst. Die Lösung besteht aus 4 wt. % Flusssäure und aus 1.9 g CuSO4 gelöst in 98 ml deionisiertem Wasser.

Das Gel trocknet wie zuvor beschrieben, und es entsteht ein Halbzeug mit vorwiegend grüner Farbe durch das Kupfersalz. Wird das Halbzeug dann auf Silizium aufgelegt und mit Wasser benetzt, so setzt sofort eine chemische Reaktion ein, bei der das Silizium an der Oberfläche aufgelöst und ein dünner Kupferfilm zwischen den Filamenten deponiert wird. In diesem speziellen Fall ist also das Substrat selbst der Reaktionsaktivator, wobei die Flusssäure aus dem Halbzeug das Silizium angreift.

Der chemische Angriff auf das Silizium kann natürlich unerwünschte Auswirkungen auf das Substrat haben. Bei manchen Anwendungen sind geringe Verluste an Silizium jedoch völlig unproblematisch. Dies gilt insbesondere bei der Kontaktierung freistehender Silizium-Nanodraht-Arrays, wie sie beispielsweise aus der Druckschrift US 2012/164529 A1 oder auch aus der Druckschrift WO 2011/066818 A1 bekannt sind. Die WO 2011/066818 A1 führt dazu auf S. 3 aus, dass es zur Herstellung von Batterieelektroden sehr wünschenswert sei, solche Arrays auf der Seite der freistehenden Nanodrahtenden weiterbearbeiten, insbesondere mit einem Metallfilm, der die Nanodrähte zum Teil umschließt, versehen zu können.

Die Schriften geben aber nicht an, wie dies schnell und kostengünstig, vorzugsweise durch galvanische Abscheidung, bewerkstelligt werden könnte. Das grundlegende Problem dabei ist die Erzeugung einer Keimschicht auf den außen liegenden, freien Nanodrahtenden, die auch eine laterale Konnektivität besitzt, mit einfachen Mitteln.

Mit Hilfe des erfindungsgemäßen Verfahrens und des Halbzeugs ist die Erzeugung eines die Drähte umschließenden Metallfilms nun recht einfach. Das Halbzeug wird vorzugsweise wie oben beschrieben beladen mit CuSO₄ und HF auf die frei stehenden Siliziumspitzen aufgelegt. Es ist dabei günstig, Nanodraht-Arrays nach der Beschreibung der WO 2011/066818 A1 als Substrat zu verwenden, da die freien Enden dann eine weitgehend regelmäßige Anordnung aufweisen. Bei Benetzung des Halbzeugs mit Wasser bildet sich ausgehend von den Siliziumspitzen, die dabei an den oberen Enden aufgelöst werden, ein lateral zusammenwachsender, dünner Kupferfilm. Sobald die chemische Reaktion zum Erliegen kommt, liegt der Kupferfilm auf den verbliebenen Nanodraht-Restspitzen, die aber dadurch nicht wesentlich verkürzt worden sein müssen. Im Zuge der anschließend möglichen elektrochemischen Abscheidung wird der Kupferfilm dann verdickt, wobei er Teilabschnitte der Silizium-Nanodrähte nach und nach immer weiter umschließt, da der Elektrolyt beide Seiten des Kupferfilms erreichen kann.

## Patentansprüche

1. Verfahren zur Erzeugung metallischer Flächenableitelektroden auf nicht-metallischen Substraten mit den Schritten
a. Erzeugen einer metallischen Keimschicht auf einem Substrat;
b. Elektrisches Kontaktieren der Keimschicht mit einem Metalldrahtnetzwerk und einem Metallionen enthaltenden Elektrolyten;
c. Galvanisches Abscheiden eines Metallfilms aus dem Elektrolyten wenigstens auf der Keimschicht unter Einbettung des Metalldrahtnetzwerks in den Metallfilm,
**dadurch gekennzeichnet, dass**
d. gegeneinander bewegliche Metalldrahtfilamente zu einem elektrisch perkolierenden Metalldrahtnetzwerk angeordnet werden,
e. die Anordnung der Metalldrahtfilamente in ein Gel eingegossen und das Gel zur Gelmatrix hiernach getrocknet wird und
f. die getrocknete Gelmatrix mit dem darin eingebetteten Metalldrahtnetzwerk auf das Substrat aufgebracht und mit einem Lösungsmittel der Gelmatrix benetzt wird.

2. Verfahren nach Anspruch 1,
**dadurch gekennzeichnet, dass**
die Anordnung der Metalldrahtfilamente zufällig durch Schüttung auf eine ebene Unterlage erfolgt.

3. Verfahren nach einem der vorangehenden Ansprüche,
**dadurch gekennzeichnet, dass**
die Metalldrahtfilamente Längen aus dem Intervall 2 Millimeter bis 1 Zentimeter, insbesondere aus dem Intervall 5 bis 9 Millimeter aufweisen.

4. Verfahren nach einem der vorangehenden Ansprüche,
**dadurch gekennzeichnet, dass**
die Metalldrahtfilamente Durchmesser aus dem Intervall 50 bis 500 Mikrometer, insbesondere 100 bis 200 Mikrometer, aufweisen.

5. Verfahren nach einem der vorangehenden Ansprüche,
**dadurch gekennzeichnet, dass**
die elektrischen Netzwerkwiderstände des aus Metalldrahtfilamenten gebildeten Metalldrahtnetzwerkes zwischen Paaren von Randkontaktpunkten entlang verschiedener Richtungen bestimmt und miteinander verglichen werden, wobei ein Metalldrahtnetzwerk nur dann verwendet wird, wenn sich der minimale und der maximale Widerstandswert um nicht mehr als den Faktor 2 unterscheiden.

6. Verfahren nach einem der vorangehenden Ansprüche,
**dadurch gekennzeichnet, dass**
zwischen den Schritten e. und f. eine Lager- und/oder Transportzeitspanne vorgesehen ist.

7. Verfahren nach einem der vorangehenden Ansprüche,
**dadurch gekennzeichnet, dass**
der Gelmatrix chemische Substanzen beigemengt werden, die in Kontakt mit dem Substrat und in Anwesenheit eines Reaktionsaktivators eine chemische Abscheidung der Keimschicht auf dem Substrat durchführen.

8. Verfahren nach einem der vorangehenden Ansprüche,
**dadurch gekennzeichnet, dass**
das Substrat aus Silizium besteht und eine Anordnung paralleler, aufrecht stehender Nanodrähte aufweist, wobei die getrocknete Gelmatrix mit den Metalldrahtfilamenten auf die freien Enden der Nanodrähte aufgebracht wird.

9. Verwendung des Verfahrens nach Anspruch 8 zur Herstellung von Elektroden für Lithium-Ionen-Akkumulatoren.

10. Halbzeug zur Durchführung des Verfahrens nach einem der vorangehenden Ansprüche,
**gekennzeichnet durch**
eine Anordnung von Metalldrahtfilamenten in einer getrockneten Gelmatrix,
wobei
die Gelmatrix aus Polyacrylamid und Beimengungen von Kupfersulfat und Flusssäure besteht.

## Claims

1. Method for producing metallic surface discharge electrodes on non-metallic substrates, comprising the steps:
a. producing a metallic seed layer on a substrate,
b. electrically contacting the seed layer with a metal wire network and an electrolyte containing metal ions,
c. electrodepositing a metal film from the electrolyte at least on the seed layer, with the metal wire network being embedded in the metal film,
**characterized in that**
d. metal wire filaments which are movable relative to one another are arranged to form an electrically percolating metal wire network,
e. the arrangement of the metal wire filaments is cast into a gel and the gel is then dried to form the gel matrix, and
f. the dried gel matrix with the metal wire network embedded therein is applied to the substrate and is wetted with a solvent of the gel matrix.

2. Method according to claim 1,
**characterized in that**
the metal wire filaments are arranged in a random fashion by being poured onto a flat support.

3. Method according to one of the preceding claims,
**characterized in that**
the metal wire filaments have lengths in the range from 2 millimetres to 1 centimetre, in particular in the range from 5 to 9 millimetres.

4. Method according to one of the preceding claims,
**characterized in that**
the metal wire filaments have diameters in the range from 50 to 500 micrometres, in particular 100 to 200 micrometres.

5. Method according to one of the preceding claims,
**characterized in that**
the electrical network resistances of the metal wire network formed of metal wire filaments are determined between pairs of edge contact points along different directions and are compared with one another, a metal wire network being used only when the minimum and maximum resistance value differ by no more than a factor of 2.

6. Method according to one of the preceding claims,
**characterized in that**
a storage and/or transport period is provided between steps e. and f.

7. Method according to one of the preceding claims,
**characterized in that**
chemical substances are admixed with the gel matrix, which chemical substances, upon contact with the substrate and in the presence of a reaction activator, chemically deposit the seed layer on the substrate.

8. Method according to one of the preceding claims,
**characterized in that**
the substrate is made of silicon and has an arrangement of parallel, upright nanowires, the dried gel matrix containing the metal wire filaments being applied to the free ends of the nanowires.

9. Use of the method according to claim 8 for producing electrodes for lithium-ion batteries.

10. Semifinished product for carrying out the method according to one of the preceding claims,
**characterized by**
an arrangement of metal wire filaments in a dried gel matrix, the gel matrix consisting of polyacrylamide and admixtures of copper sulphate and hydrofluoric acid.

## Revendications

1. Procédé de fabrication d'électrodes de décharge métalliques plates sur des substrats non métalliques, comprenant les étapes suivantes consistant à
a. créer une couche d'ensemencement métallique sur un substrat ;
b. mettre en contact électrique la couche d'ensemencement avec un réseau de fils métalliques et un électrolyte contenant des ions métalliques ;
c. déposer par voie galvanique d'un film métallique composé de l'électrolyte au moins sur la couche d'ensemencement en encapsulant le réseau de fils métalliques dans le film métallique,
**caractérisé en ce que**
d. les filaments métalliques mobiles les uns par rapport aux autres sont disposés en un réseau de fils métalliques à percolation électrique,
e. l'arrangement des filaments métalliques est scellé dans un gel et le gel est ensuite séché pour former une matrice de gel et
f. la matrice de gel séchée avec le réseau de fils métalliques encapsulé dedans est appliquée sur le substrat et mouillée avec un solvant de la matrice de gel.

2. Procédé selon la revendication 1,
**caractérisé en ce que**
les filaments métalliques sont disposés de manière aléatoire en les versant sur un support plat.

3. Procédé selon l'une des revendications précédentes,
**caractérisé en ce que** les filaments métalliques ont des longueurs comprises entre 2 millimètres et 1 centimètre, en particulier entre 5 et 9 millimètres.

4. Procédé selon l'une des revendications précédentes,
**caractérisé en ce que**
les filaments métalliques ont des diamètres compris entre 50 et 500 micromètres, en particulier entre 100 et 200 micromètres.

5. Procédé selon l'une des revendications précédentes,
**caractérisé en ce que**
les résistances électriques de réseau du réseau de fils métalliques formé de filaments métalliques sont mesurées entre des paires de points de contact de bords dans différentes directions et elles sont comparées entre elles, un réseau de fils métalliques n'étant utilisé que si les valeurs de résistance minimale et maximale diffèrent d'un facteur 2 au plus.

6. Procédé selon l'une des revendications précédentes,
**caractérisé en ce qu'**
une période de stockage et/ou de transport est prévue entre les étapes e. et f.

7. Procédé selon l'une des revendications précédentes,
**caractérisé en ce que**
des substances chimiques sont ajoutées à la matrice de gel, lesquelles, quand elles sont en contact avec le substrat et en présence d'un activateur de réaction, effectuent un dépôt chimique de la couche d'ensemencement sur le substrat.

8. Procédé selon l'une des revendications précédentes,
**caractérisé en ce que**
le substrat est constitué de silicium et présente un arrangement de nanofils parallèles disposés verticalement, la matrice de gel séché avec les filaments métalliques étant appliquée sur les extrémités libres des nanofils.

9. Utilisation du procédé selon la revendication 8 pour la fabrication d'électrodes pour batteries aux ions lithium.

10. Produit semi-fini pour la mise en oeuvre du procédé selon l'une des revendications précédentes,
**caractérisé par**
un arrangement de filaments métalliques dans une matrice de gel séchée, la matrice de gel étant constituée de polyacrylamide avec addition de sulfate de cuivre et d'acide fluorhydrique.
